# EUROPEAN PATENT APPLICATION

(11) **EP 4 266 010 A1**
(43) Date of publication of application: **25.10.2023**
(21) Application number: 22169061.3
(22) Date of filing: 20.04.2022
(51) Int. Cl.: G01F 23/04, C25C 3/20, C25C 3/14, G01F 23/24

(54) **ACTUATOR FOR A PROBE**

(71) Applicant: Parker Hannifin EMEA S.à.r.l., 1163 Etoy (CH)
(72) Inventor: Moerel, Alexander, 2904CR Capelle aan den Ijssel (NL); Trinidad-Palacios, Nestor, 77652 Offenburg (DE)
(74) Representative: Feucker, Max Martin

(57) **Abstract**

The present invention refers to an actuator for a probe (6), comprising a motor (12), a drive element (13), wherein the drive element (13) is linearly displaceable by the motor (6) in a primary displacement direction (14), a rod (15) fixedly connected to the drive element (13), wherein the rod (15) is linearly displaceable along a rod displacement direction, wherein the primary displacement direction (14) and the rod displacement direction (16) are not identical.

## Description

The present invention relates to the measurement of electrolyte height and metal height in an electrolysis cell. In particular, the invention relates to an aluminum reduction cell and a measurement system for an aluminum reduction cell. The invention in particular relates to an actuator for a probe of a measurement system for a reduction cell.

In general, aluminum is produced on an industrial scale using the Hall-Heroult principle, in which alumina (aluminum oxide, Al₂O₃) is dissolved in molten cryolite (Na₃AlF₆) and decomposed electrolytically to produce liquid aluminum. The anodes of the electrolytic cell are made of carbon and a layer of liquid aluminum acts as cathode. The volume of cryolite is critical as it must be able to dissolve and rapidly separate the alumina, which is frequently introduced by the point feeder. At the same time, the electrolyte must not exceed the level above which it would disturb the thermal equilibrium of the cell and cause corrosion of the steel objects (post, anode yokes etc.) with iron pollution of the produced aluminum as a consequence.

The electrolyte (also referred to as bath) and metal levels inside an aluminum reduction cell are important smelting process parameters. Due to the harsh environment caused by high temperature, dust, gases and magnetism, obtaining the electrolyte and metal levels in a reliable automated way has proven to be difficult. For measuring the electrolyte and metal levels, it is still relied on manual measurement methods which are labor-intensive, relative inaccurate and not without risk. In order to maximize the process efficiency, it is desired to measure the levels more frequently, on demand and/or with better accuracy.

The tool used for manual level measurement is usually made of thin round steel bars with a spirit level attached. The contraption is placed at a fixed point in height and the long end of the steel is submerged through a hole in the crust straight in the electrolyte and metal. The tool is left in the melt for some seconds, allowing the liquids to feed up the steel rod. When the rod is lifted out of the pot, three areas can be distinguished: the bottom part of the rod that has been in contact with the liquid aluminum, the middle section that has been in contact with electrolyte and the top part that was not submerged at all. This rod is then held next to a dedicated ruler. The bath and metal height can now be read or estimated as there are many factors that affect the accuracy of the outcome. Based on these levels obtained, pot operators can decide to add or remove an amount of bath and/or metal in order to get the pot closer to the optimum performance. In order to keep the electrolyte level within the desired limits, the level must be measured frequently.

CN 112665642A suggests to use two cylinders, each equipped with a respective sensor to measure the parameters of the electrolyte and metal. In order to operate this measurement system, a feeding hole has to be punched into the crust on top of the bath manually in order that the sensors can be lowered into the bath. Furthermore, the setup has the disadvantage that electrical signals produced by the sensors are not reliably transmitted to an outside evaluation unit.

It is therefore an object of the present invention to provide an actuator, with which electrical signals can be reliably transmitted to an outside evaluation unit.

A possible solution for this object is given with an actuator having the features of the independent claim. Further solutions and preferred embodiments are described in the dependent claims and in the preceding and following description, wherein single features of the preferred embodiments can be combined with each other in a technical meaningful manner.

A measurement system for a (aluminum) reduction cell usually comprises a crust breaker assembly, the crust breaker assembly having a chisel and a chisel actuator, wherein the chisel is linearly displaceable in a crust breaker direction, and a probe assembly, the probe assembly having a probe and a probe actuator, wherein the probe is linearly displaceable in a probe direction.

Furthermore, for measuring electrolyte height and/or metal height in a (aluminum) reduction cell a method is proposed, preferably by operating an inventive measurement system, comprising the following steps:
- Punching a feeding hole into a crust of the electrolyte by linearly advancing a chisel in a crust breaker direction,
- Linearly advancing a probe through the feeding hole in a probe direction into the electrolyte.

In a preferred embodiment, the crust breaker direction is aligned perpendicular to a plane of a crust formed by a bath in the cathodic pot.

With other words: A measurement system may have two assemblies (crust breaker assembly and probe assembly), wherein the two assemblies can be operated independent of each other, and wherein the crust breaker assembly is used to automatically punch a feeding hole into the crust of the electrolyte, wherein the probe assembly is arranged in such a way, that the probe can be automatically displaced through the feeding hole formed by the crust breaker assembly into the electrolyte. This way, parameters of the electrolyte and the aluminum can be measured highly automatic without the need of manual labor. Furthermore, by punching a feeding hole with a first assembly and by using a second assembly for measurement, it is not necessary to transmit greater forces for breaking a feeding hole with the assembly for measurement.

The measurement system preferably comprises a control unit, which is in particular embodied to perform the inventive method and which is preferably connected to the probe actuator, to the probe and the to the chisel actuator. With such a control unit, the aluminum reduction cell can be operated in a more automated manner.

The present invention also relates to an aluminum reduction cell, comprising a cathodic pot, anode means, and an electric source for creating an electric current between the cathode and anode as well as a measurement system.

The chisel of the crust breaker assembly is an element, which is embodied to punch a feeding hole into the crust, when linearly displaced through the crust. Accordingly, the chisel has a respective shape and is made of a suitable material.

The chisel actuator of the crust breaker assembly may be embodied as any suitable actuator, with which the chisel can be linearly displaced. For example, the chisel actuator may be a hydraulic or electromechanical actuator. Nevertheless, in a preferred embodiment, the chisel actuator is a pneumatic cylinder, wherein the chisel is mounted on an end of a piston rod of the pneumatic cylinder.

In a preferred embodiment, the measurement system comprises a frame, to which the crust breaker assembly and/or the probe assembly is mounted. At least the probe assembly can be mounted in an electrically isolated manner to the frame, for which the probe drive may be isolated from the frame by isolating sleeves. By electrically isolating the probe assembly from the frame it can be avoided that electrical potentials induced into the frame are forwarded to the probe assembly and interfere with electrical signals derived from the probe. The frame may be mounted in a stationary manner with regard to the reduction cell. But it may also be possible that the frame is movable, so that the measurement system can be aligned with the cathodic pot, when desired.

In a preferred embodiment, the crust breaker direction and the probe direction are inclined to each other. Accordingly, the crust breaker assembly and the probe assembly are mounted in such a way, that the probe direction and the crust breaker direction are not parallel to each other.

By aligning the crust breaker direction and the probe direction in an inclined manner, it is possible that the probe can be introduced into the bath more or less exactly in the middle of the feeding hole, so that the crust breaker assembly does not need to be embodied to punch a relatively large feeding hole into the crust.

In a preferred embodiment, the crust breaker assembly and the probe assembly are aligned in such a manner to each other that the crust breaker direction and the probe direction intersect at the level of the crust or below the crust. In a preferred embodiment, the crust breaker direction and the probe direction intersect with an angle between 10° and 30°.

In principle, the probe actuator can be embodied as any suitable actuator, with which the probe can be linearly displaced. For example, the probe actuator may be a hydraulically or pneumatically operated actuator. Nevertheless, according to the invention the probe actuator is an electromechanical actuator, with which a highly precise displacement of the probe is possible. Such an electromechanical actuator may comprises a motor with a shaft, which rotation is transmitted into a linear displacement along the probe direction.

Furthermore, it is preferred that the probe assembly comprises a displacement sensor, with which the linear displacement in the probe direction can be measured. Such a displacement sensor may be of the known type. With such a displacement sensor, the displacement of the probe can be measured, so that the measured signal (for example a voltage) of the probe can be assigned to a specific location of the probe within the bath. Accordingly, when measuring a signal along the linear displacement of the probe a signal profile along the displacement direction of the probe and therefore along the depth of the bath can be attained. The height of the electrolyte and/or the liquid aluminum can be deduced from the profile. Additionally, a position control and/or speed control is possible with the displacement sensor.

The probe mounted on the end of the rod is connected in an electrically conductive manner to the control unit in order to read the voltages of the bath and metal. The electrolyte acts like a resistor between the anodes and the cathode and therefore the immersion depth has a profound influence on the voltage reading of the probe. The metal pad on the other hand is considered equipotential and its voltage will be the same irrespective of the immersion depth. Accordingly, in a preferred embodiment the probe is embodied to measure the voltage of the bath and metal.

When the probe voltage is plotted against the displacement (in case the probe is lowered from above into the bath), it can be deduced, when the probe comes into contact with the bath, in which case the probe voltage suddenly becomes stable and close to the anode voltage. Furthermore, it can be deduced, when the probe comes in contact with the metal, in which case the probe voltage no longer lowers despite the probe being immersed deeper. Accordingly, the total liquid and metal height can be derived from the probe displacement.

For example, the probe is embodied to measure a voltage, for which the probe is on the same electrical potential with an electrical connection, to which the control unit may be connected. Accordingly, a voltage can be measured by the probe during the linear advancement, wherein the electrolyte height and/or metal height is derived from the measured voltage.

Preferably, the probe is a metallic body, which is connected in an electrically conductive manner to an electrical connector of the probe actuator, which is easily accessible. The electrically conductive connection between the probe and the electrical connector may be provided by the rod and the below described contact arrangement.

The above object is in particular solved with an actuator for a probe, comprising a motor, a drive element, wherein the drive element is linearly displaceable by the motor in a primary displacement direction, and a rod fixedly connected to the drive element, wherein the rod is linearly displaceable along a rod displacement direction. According to the invention, the primary displacement direction and the rod displacement direction are not identical.

In a specific embodiment, the primary displacement direction and the rod displacement direction are parallel and offset to each other.

With other words: The present invention suggests that the motor of the actuator drives a drive element in the primary displacement direction so that the drive element is linearly displaced by the motor. Additionally, the drive element is fixedly connected to a rod, so that the rod is linearly displaced when the drive element is displaced. This way, the primary displacement direction of the drive element is not identical with the rod displacement direction of the rod. By such an arrangement, the end of the rod opposite to the end receiving the probe does not need to be connected to an element of the motor or to the drive element, so that the space at this end of the rod can be solely used to connect the rod in an electrically conductive manner to a control unit without mechanical interference with the motor or elements for driving drive element. Accordingly, the rod, which is also made to transfer an electrical potential of the probe to its other end, can be more easily connected in an electrically conductive manner to an electrical connector.

The separation of the rod and the drive element has the further advantage that the lubrication of the drive unit can be set up independent of the movement of the rod.

The rod is in particular embodied to receive a probe at its one end, wherein the one end for receiving the probe preferably extends to an outside of a housing of the actuator.

In order to connect the probe to the rod, the rod may comprise a thread, onto which the probe can be screwed.

According to a further aspect of the invention, which solves the above object and which may be claimed independent of the primary displacement direction and rod displacement direction being not identical, the drive element and the rod are mechanically connected by a connector, whereby the rod is electrically isolated. For example, the connector may be embodied as bracket, which is directly fixed to the drive element and which is also directly fixed to the rod. The connector may be made of an electrically insulating material. By electrically insulating the drive element from the rod, it is ensured that an electric potential of the rod is not interfered by an electric potential (or electrical signal) applied to the drive element. This way, it is avoided that an electric potential originating from the motor of the actuator (which may occur, if the motor is not perfectly isolated from the drive element), interfere with the measurement signal (voltage) attained by the probe. This way, a more accurate measurement is possible.

By separating the drive element and the rod and by using a thermally insulating mechanical connector, also a thermal insulation between the drive element and the rod is given, so that the components of the drive element are protected from high temperatures.

The motor of the actuator may be any suitable motor. Preferably, the motor is an electric motor, which shaft is driven to a rotational movement.

In a preferred embodiment, a screw drive is connected to the shaft of the (electric) motor. A lead screw of the screw drive has an outer thread, whereas a nut is directly or indirectly placed on the outer thread, so that by a rotation of the lead screw the nut is displaced linearly along the lead screw. Accordingly, the nut of the screw drive needs to be considered the drive element, which is linearly displaceable along the primary displacement direction. The screw drive may be embodied as ball screw drive, wherein the threaded shaft provides a helical raceway for ball bearings which act with the nut. Alternatively, the screw drive may be embodied as roller screw drive (also known as planetary roller screw or satellite roller screw). In a further embodiment, the screw drive may be embodied as trapezoidal thread drive, in which the screw thread profile of the threaded shaft has trapezoidal outlines.

According to an embodiment of the actuator, the drive element (and in particular the lead screw drive) is arranged in a first housing and the rod is arranged in a second housing, wherein the rod is arranged in the second housing in an electrically isolated manner. The drive element and the rod are connected through openings within the two housings so that the above-described fixed connection between the drive element and the rod is attained. Accordingly, the two main functions of the actuator are separated. The drive unit for providing the motion and positioning is arranged in and/or on the first housing, while the rod for transferring the electrical measurement signal is arranged in the second housing.

Additionally, by arranging the rod inside the second housing, the signal transmission through the rod is protected from the outside environment.

The rod may be electrically isolated from the second housing. For this, the rod may extend through a first opening in the second housing in an electrically isolated manner, for which, for example, an electrically isolated bushing is arranged in the opening, wherein the rod extends through the bushing.

The first housing and the second housing may be made of aluminum profiles, which aluminum profiles may be connected to each other.

The second housing may comprise an electrical connection opposite to the first opening through which the rod extends, wherein the electrical connection is electrically isolated with regard to the second housing. Accordingly, the electrical connection (for example a plug or connector, into which a counterpart may be plugged) is fixed in the second housing in an electrically isolated manner, so that electrical potentials applied to the second housing do not interfere with the transfer of the signal received from the probe, which signal is transferred through the electrical connection to a control unit.

As the rod is linearly displaceable, it is necessary to transfer a signal (electrical potential, voltage) from the probe to the stationary electrical connection. For this purpose, it is suggested that the rod is electrically connected to a contact arrangement, with which the rod is electrically connected to the electrical connection at any possible position along the rod displacement direction.

For example, the contact arrangement may comprise a lance, which lance is stationary connected to the electrical connection and which lance extends along the rod displacement direction. Preferably, the lance is surrounded by the rod, so that the lance is at least partly arranged within the rod. This way, the rod can be displaced relative to the stationary lance. In order to provide an electrical connection between the rod and the lance, a non-stationary contact (i.e. a sliding contact) may be provided between the rod and the lance.

In a further embodiment, the contact arrangement comprises a spring, which is preferably provided between the movable rod and the stationary electrical connection. The spring is elongated and compressed, when the rod is moved along the rod displacement direction, wherein the spring transfers the electrical signal (electrical potential) from the rod to the electrical connection.

The invention and the technical background will now be described with regard to the figures. The figures show schematically
- Figure 1:: a measurement system for an aluminum reduction cell with a crust breaker assembly in an extended state,
- Figure 2:: the measurement system of Figure 1 with a probe assembly in an extended state, and
- Figure 3:: an actuator of the probe assembly.

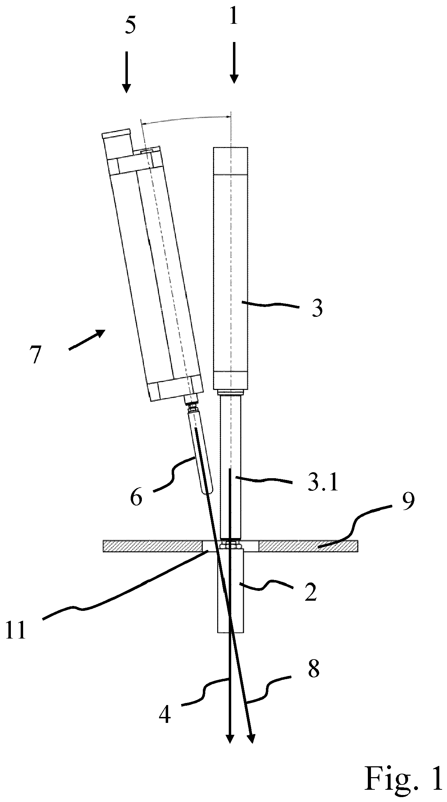

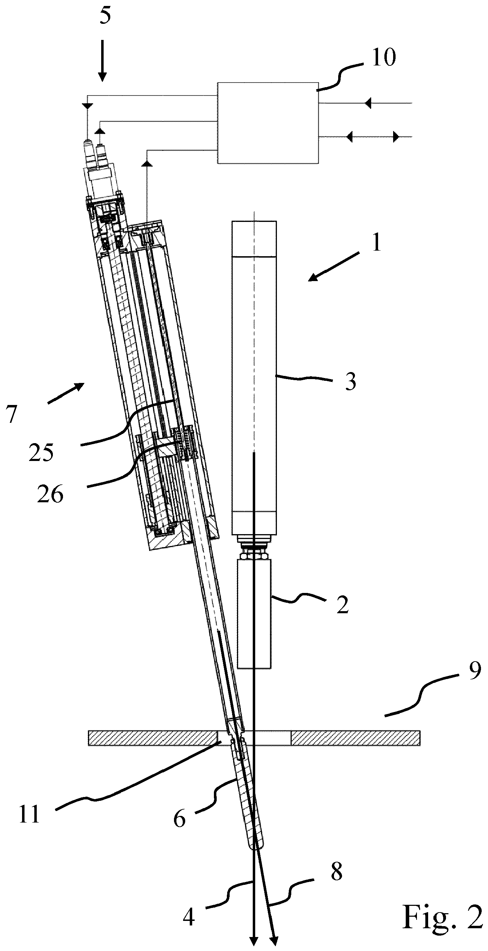

The measurement system is depicted in Figures 1 and 2. The measurement system comprises a crust breaker assembly 1 and a probe assembly 5.

The crust breaker assembly 1 comprises a pneumatic chisel actuator 3 having a piston rod 3.1. A chisel 2 is connected to the piston rod 3.1 of the chisel actuator 3. The chisel 2 can be linearly displaced along a crust breaker direction 4.

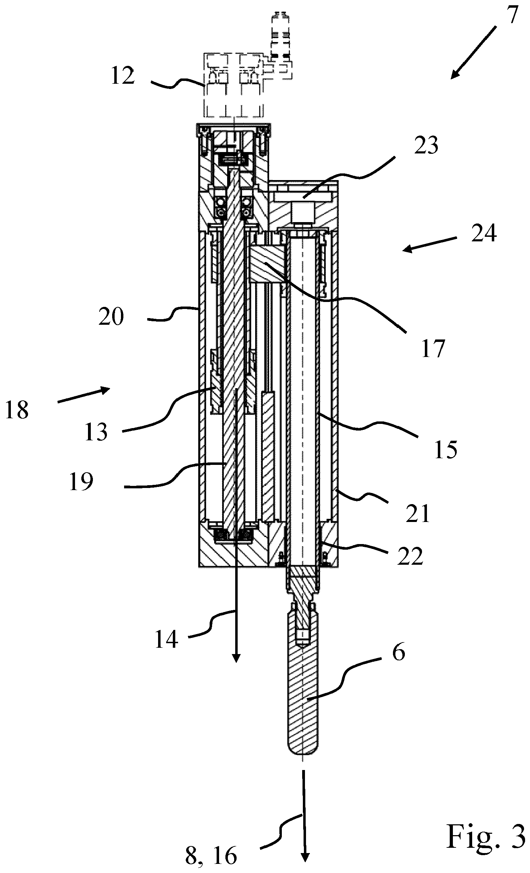

The probe assembly 5 comprises a probe actuator 7, which is depicted in Figure 3 and will be described in more detail with regard to Figure 3. The probe assembly 5 comprises a probe 6, which is connected to the probe actuator 7 and which can be linearly displaced in a probe direction 8 by the probe actuator 7.

The crust breaker assembly 1 and the probe assembly 5 are connected to a control unit 10, which is embodied to operate the chisel actuator 3 and the probe actuator 7 and which can receive voltage signals from the probe 6.

The measurement system is arranged above an aluminum reduction cell, wherein a crust 9 is formed on top of the bath within the aluminum reduction cell.

The crust breaker assembly 1 is arranged in such a way that the crust breaker direction 4 is perpendicular to the surface of the crust 9. By advancing the chisel 2 in the crust breaker direction 4 downwards, the chisel punches a feeding hole 11 into the crust 9 (see Figure 1). When the chisel 2 is withdrawn, the probe 6 can be advanced through the feeding hole 11. When the probe 6 comes into contact with the electrolyte and/or metal, an electric potential is applied to the probe 6, which resulting voltage can be measured with the control unit 10. When advancing the probe linearly into the electrolyte and metal, the voltage is continuously monitored so that the height of the electrolyte and metal can be deduced from the measured voltage profile along the displacement.

The probe actuator 7 depicted in Figure 3 comprises an electric motor 12 which is connected to a first housing 20 of the probe actuator 7. The shaft of the electric motor 12 is connected to a lead screw 19 of a lead screw drive 18. The lead screw drive 18 comprises a nut which embodies a drive element 13. When the electric motor 12 is activated to rotate the lead screw drive, the drive element 13 is linearly displaced along a primary displacement direction 14, which is identical to the rotation axis of the lead screw 19.

The probe actuator 7 comprises a second housing 21, in which a rod 15 is arranged. The rod 15 is connected to the drive element 13 by an electrically isolated connector 17. When the drive element 13 is driven up and down along the primary displacement direction 14, the rod 15 is displaced linearly along a rod displacement direction 16. The primary displacement direction 14 and the rod displacement direction 16 are parallel and offset to each other. The rod displacement direction 16 is identical to the above mentioned probe direction 8.

The second housing 21 comprises a first opening 22, through which the rod 15 extends. The rod 15 is connected to a probe 6 outside of the second housing 21.

On the opposite side to the first opening 22, an electrical connection 23 is mounted in the second housing 21 in an electrically isolated manner.

A contact arrangement 24 is arranged between the movable rod 15 and the stationary electrical connection 23. As depicted in Figure 2, the contact arrangement 24 may comprise a lance 25, which extends in the rod displacement direction 16 and which is surrounded by the rod 15. Furthermore, the contact arrangement 24 comprises a spring 26 between the rod 15 and the lance 25. In an alternative embodiment, the spring 26 may be replaced by a sliding contact so that the rod 15 and the lance 25 are connected in an electrically conductive manner to each other.

Accordingly, the probe 6 is connected to the electrical connection 23 in an electrically conductive manner, whereas this electrical conductive connection is electrically isolated from the housings 20, 21 and the lead screw drive 18 and therefore from the motor 12. Accordingly, a voltage (electrical potential) which is attained by the probe 6 can be transferred without interferences via the rod 15 and the contact arrangement 24 to the electrical connection 23 and therefore to the control unit 10, so that an accurate measurement of the voltage is possible.

### Reference list

- 1: crust breaker assembly
- 2: chisel
- 3: chisel actuator
- 3.1: piston rod
- 4: crust breaker direction
- 5: probe assembly
- 6: probe
- 7: probe actuator
- 8: probe direction
- 9: crust
- 10: control unit
- 11: feeding hole
- 12: motor
- 13: drive element
- 14: primary displacement direction
- 15: rod
- 16: rod displacement direction
- 17: connector
- 18: lead screw drive
- 19: lead screw
- 20: first housing
- 21: second housing
- 22: first opening
- 23: electrical connection
- 24: contact arrangement
- 25: lance
- 26: spring

## Claims

1. Actuator for a probe (6), comprising
- a motor (12),
- a drive element (13), wherein the drive element (13) is linearly displaceable by the motor (6) in a primary displacement direction (14),
- a rod (15) fixedly connected to the drive element (13), wherein the rod (15) is linearly displaceable along a rod displacement direction, wherein
the primary displacement direction (14) and the rod displacement direction (16) are not identical.

2. Actuator according to claim 1, wherein the primary displacement direction (14) and the rod displacement direction (16) are parallel and offset to each other.

3. Actuator according to claims 1 or 2, wherein the rod (15) is embodied to receive a probe (6) at its one end.

4. Actuator according to one of the preceding claims, **characterized in that** the drive element (13) and the rod (15) are mechanically connected by a connector (17), whereby the rod (15) is electrically insulated.

5. Actuator according to one of the preceding claims, wherein the drive element (13) is a nut as part of a screw drive (18).

6. Actuator according to one of the preceding claims, wherein the motor (12) is an electric motor.

7. Actuator according to one of the preceding claims, wherein a lead screw (19) as part of a screw drive (18) is connected to a shaft of the motor (12).

8. Actuator according to one of the preceding claims, wherein the drive element (13) is arranged in a first housing (20) and the rod (15) is arranged in a second housing (21), wherein the rod (15) is arranged in the second housing (21) in an electrical insulated manner.

9. Actuator according to claim 8, wherein the rod (15) extends through a first opening (22) in the second housing (21) in an electrical insulated manner.

10. Actuator according to claim 8 or 9, wherein the second housing (21) comprises an electrical connection (23) opposite to the first opening (22), wherein the electrical connection (23) is electrically insulated with regard to the second housing (21).

11. Actuator according to one of the preceding claims, wherein the rod (15) is electrically connected to a contact arrangement (24) for electrically connecting the rod (15) to an electrical connection (23).

12. Actuator according to claim 11, wherein the contact arrangement (24) comprises a spring (26) or a non-stationary electrical contact.

13. Actuator according to claim 11 or 12, wherein the contact arrangement (24) comprises a lance (25).

14. Measurement system for a reduction cell, comprising
- a crust breaker assembly (1), the crust breaker assembly (1) having
• a chisel (2),
• a chisel actuator (3), wherein
• the chisel (2) is linearly displaceable in a crust breaker direction (4), and
- a probe assembly (5), the probe assembly (5) having
• a probe (6),
• a probe actuator (7) according to one of the preceding claims, wherein
• the probe (6) is linearly displaceable in a probe direction (8).

15. Reduction cell, comprising
- a cathodic pot,
- anode means,
- an electric source for creating an electric current between the cathodic pot and the anode means and
- a measurement system according to claim 14 arranged above the cathodic pot.
